# EUROPÄISCHE PATENTSCHRIFT

(11) **EP 2 687 084 B1**
(45) Veröffentlichungstag und Bekanntmachung des Hinweises auf die Patenterteilung: **15.07.2015**
(21) Anmeldenummer: 13171225.9
(22) Anmeldetag: 10.06.2013
(51) Int. Cl.: A01G 9/20

(54) **Frühbeet mit Dachelement**
Frame with roof element
Châssis de couche avec élément de toit

(30) Priorität: 16.07.2012 AT 7872012
(43) Veröffentlichungstag der Anmeldung: 22.01.2014
(73) Patentinhaber: Wüster, Heinrich, 6460 Imst/Tirol (AT)
(72) Erfinder: Wüster, Heinrich, 6460 Imst/Tirol (AT)
(74) Vertreter: Grabherr, Claudia

(56) Entgegenhaltungen:
- EP-A2- 0 149 443
- FR-A1- 2 529 746
- SU-A1- 1 694 080
- US-A- 419 370
- US-A1- 2008 155 896

## Beschreibung

Die Erfindung bezieht sich auf ein Frühbeet mit zumindest einem lichtdurchlässigen Dachelement, das an der Oberseite des Frühbeets angeordnet ist.

Beim Frühbeet bilden die seitlichen Wandelemente einen nach oben und nach unten offenen Behälter, der am Erdboden aufsteht und in dessen Innenraum Pflanzen angeordnet sind. Die Oberseite des Behälters wird durch ein oder zwei hochklappbare, lichtdurchlässige Dachelemente abgedeckt. Die lichtdurchlässigen Dachelemente enthalten Glasplatten oder hochtransparente Hohlkammerplatten aus Kunststoff (Polykarbonat).

Das Frühbeet wird im Frühjahr aufgebaut und bis in den Frühsommer als Wachstumshilfe für die im Frühbeet angeordneten Pflanzen genutzt. Während dieser Zeit schützen die zugeklappten Dachelemente bei kälterer Witterung den Innenraum des Frühbeets und die dort angeordneten Pflanzen vor zu großer Abkühlung. Bei steigender Außentemperatur und steigender Sonneneinstrahlung werden die Dachelemente nach und nach immer weiter hochgeklappt und in der jeweiligen Schrägstellung fixiert. Dadurch wird ein Überhitzen des Innenraumes des Frühbeets und der dort angeordneten Pflanzen verhindert. Nach dem Frühsommer werden die Dachelemente entfernt, oder das Frühbeet wird als Ganzes abgebaut. Während der wichtigsten Wachstumsperiode der Pflanzen bleibt das Frühbeet ungenutzt. Eine weitere kurze Nutzungsperiode für das Frühbeet ergibt sich im Herbst, wenn die letzten Pflanzen vor dem einsetzenden Frost geschützt werden sollen. Gattungsgemäße Frühbeete, wie zum Beispiel durch US419370 A oder FR2529746 A1 bekannt, weisen zumindest ein lichtdurchlässiges Dachelement auf, das an der Oberseite des Frühbeets angeordnet ist. Das Dachelement umfasst einen äußeren Rahmen, der ein den Innenraum des Frühbeets überspannendes, feinmaschiges, licht- und luftdurchlässiges Gitterelement trägt, das im Innenraum des Rahmens angeordnet ist.

Derartige Frühbeete können vom zeitigen Frühjahr durchgehend bis in den Spätherbst genutzt werden. Das mit einem feinmaschigen Gitterelement versehene Dachelement schützt im zugeklappten Zustand den Innenraum des Frühbeets und die dort

Dieses Problem wird erfindungsgemäß durch ein Frühbeet gemäß Patentanspruch 1 gelöst.

Das erfindungsgemäße Frühbeet kann vom zeitigen Frühjahr durchgehend bis in den Spätherbst genutzt werden. Das mit einem feinmaschigen Gitterelement versehene Dachelement schützt im zugeklappten Zustand den Innenraum des Frühbeets und die angeordneten Pflanzen vor fliegenden Schädlingen, aber auch vor Schnecken und kriechenden Schädlingen. Gleichzeitig bleibt die Belüftung des Frühbeets durch das feinmaschige Gitterelement hindurch erhalten. Die im Frühbeet entstehende Wärme kann nach oben durch das feinmaschige Gitterelement austreten. Die auf das feinmaschige Gitterelement auftreffenden Sonnenstrahlen werden am Gitterelement gestreut. Gleichzeitig ermöglicht das feinmaschige Gitterelement eine natürliche Bewässerung durch Regen, aber auch eine manuelle Bewässerung mittels Gartenschlauch oder Gießkanne. Bei Starkregen oder Hagel schützt das feinmaschige Gitterelement die im Frühbeet angeordneten Pflanzen vor einer Beschädigung. Starkregen oder Hagel trifft zuerst auf das feinmaschige Gitterelement und wird von diesem aufgefangen, ohne die unterhalb von Gitterelement angeordneten Pflanzen zu beschädigen. Lediglich zum Pflanzen, Jäten oder Ernten muss das Dachelement hochgeklappt werden. Über den Sommer kann das mit einem feinmaschigen Gitterelement versehene Dachelement am oberen Rand der seitlichen Wandelemente des Frühbeets liegen bleiben.

Das Gitterelement ist als flexibles, feinmaschiges Netz ausgebildet, das an zumindest zwei Schenkeln des Rahmens in an den Innenseiten der Schenkel angeordneten, nach oben offenen Nuten aufgenommen ist, wobei das Gitterelement vorzugsweise in jeder Nut durch ein Klemmelement festgeklemmt ist. Die nach oben offenen Nuten sind als hinterschnittene Nuten ausgebildet und das Gitterelement ist in den hinterschnittenen Nuten durch in den Nuten angeordnete, die Hinterschneidungen der Nuten hintergreifende Klemmelemente festgeklemmt. Als Klemmelement ein in die Nut eingesetzter Profilstab vorgesehen ist, der als ein elastisches, in Querrichtung zusammendrückbares Klemmprofil ausgebildet ist.

Derartiges Frühbeete sind beispielsweise aus der FR 2 529 746 A1 und der SU 1 694 080 A1 bekannt. Ein Problem dieser Frühbeete besteht jedoch darin, dass diese bei kälterer Witterung nicht verwendet werden können.

Zur Lösung dieser Aufgabe ist vorgesehen, dass der äußere Rahmen ein über dem Gitterelement angeordnetes, das Gitterelement überdeckendes Fensterelement trägt, das vorzugsweise am äußeren Rahmen befestigbar und abnehmbar ist.

Diese Ausbildung des Dachelements erlaubt es, das Fensterelement im Frühjahr und im Spätherbst bei kälterer Witterung auf das Dachelement aufzusetzen. Am Beginn des Sommers kann das Fensterelement vom Dachelement abgenommen werden und der Schutz der Pflanzen durch das im Dachelement angeordnete, feinmaschige, licht- und luftdurchlässige Gitterelement bleibt erhalten.

Das mit dem aufgesetzten Fensterelement versehene Dachelement wird je nach Außentemperatur und Sonneneinstrahlung mehr oder weniger weit hochgeklappt und in der jeweiligen Schrägstellung fixiert. Bei zugeklapptem Dachelement hält das über dem Gitterelement angeordnete Fensterelement die warme Luft im Frühbeet zurück.

Das Gitterelement kann an zumindest zwei gegenüberliegenden Schenkeln des Rahmens auf nach innen vorstehenden Stegen aufliegen.

Gemäß einem weiteren Merkmal der Erfindung kann das Gitterelement mit seinem äußeren Rand bei zumindest zwei Schenkeln des Rahmens in an den Innenseiten der Schenkel angeordneten, nach oben offenen Längsnuten aufgenommen sein.

Gemäß einem weiteren Merkmal der Erfindung kann das Gitterelement aus einem als Insektenschutzgitter oder als Fliegengitter ausgebildeten Drahtgitter bestehen, insbesondere aus einem Drahtgitter aus Edelstahlgewebe oder aus Aluminiumgewebe.

Gemäß einem weiteren Merkmal der Erfindung kann das flexible, feinmaschige Netz aus einem als Insektenschutzgitter oder als Fliegengitter ausgebildeten, vorzugsweise beschichteten Fiberglasgewebe bestehen.

Gemäß einem weiteren Merkmal der Erfindung kann das Fensterelement als transparente Platte ausgebildet sein, die in am Rand des Dachelements angeordnete Längsnuten eingeschoben ist.

Gemäß einem weiteren Merkmal der Erfindung kann das Fensterelement an zwei gegenüberliegenden Rändern mit Halteprofilen versehen sein, die die Schenkel des äußeren Rahmens des Dachelements umgreifen.

Gemäß einem weiteren Merkmal der Erfindung kann das Fensterelement mit einem auf den äußeren Rahmen des Dachelements von oben aufsteckbaren Rahmen versehen sein.

Gemäß einem weiteren Merkmal der Erfindung kann der Rahmen des Fensterelements an der Unterseite zwei vertikale Passstifte tragen, die beim äußeren Rahmen des Dachelements in vertikalen Bohrungen aufnehmbar sind.

Erfindungsgemäß kann das Fensterelement eine Glasplatte oder eine hochtransparente Hohlkammerplatte aus Kunststoff umfassen.

Nachstehend wird die Erfindung anhand von Ausführungsbeispielen näher erläutert. In den Zeichnungen zeigen:
Fig. 1 zeigt ein erstes Frühbeet in Schrägansicht,
Fig. 2 zeigt ein zweites Frühbeet in Schrägansicht,
Fig. 3 zeigt ein drittes Frühbeet in Schrägansicht,
Fig. 4 zeigt ein erstes Dachelement in Draufsicht,
Fig. 5 zeigt ein zweites Dachelement im Querschnitt,
Fig. 6 zeigt das Dachelement von Fig. 5 im Längsschnitt,
Fig. 7 zeigt ein drittes Dachelement im Querschnitt,
Fig. 8 zeigt ein viertes Dachelement im Querschnitt,
Fig. 9 zeigt einen Rahmenschenkel eines Dachelementrahmens im Querschnitt, und
Fig. 10 zeigt einen Profilstab im Querschnitt.

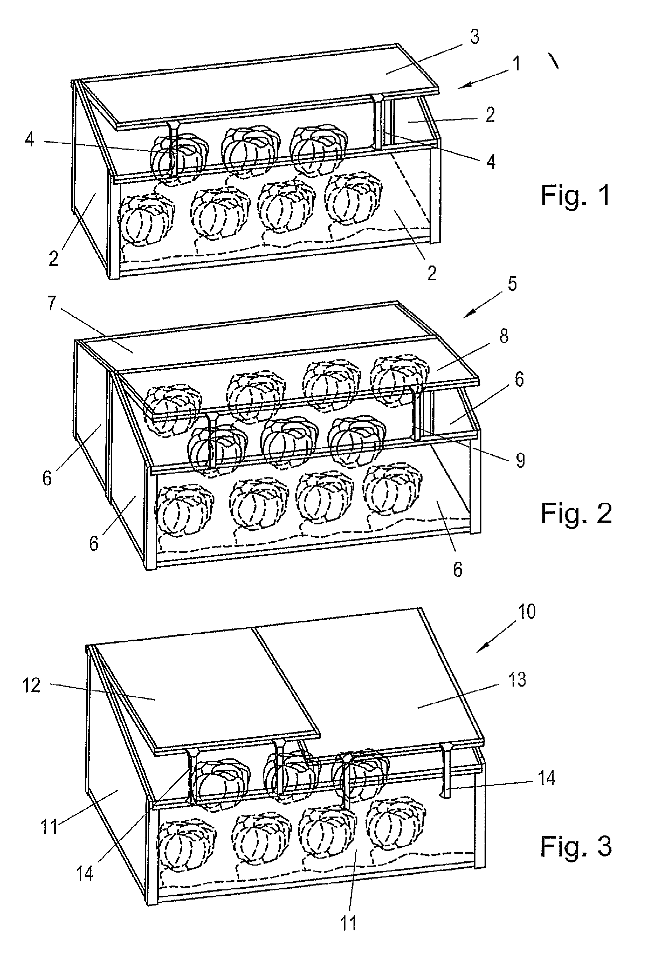

Fig. 1 zeigt ein mit Pflanzen besetztes Frühbeet 1 mit Pultdach. Das Frühbeet 1 besitzt einen aus vier Wandelementen 2 zusammengesetzten, rechteckigen Frühbeetkasten, der mit der offenen Unterseite am Erdboden aufsitzt. An der offenen Oberseite des Frühbeetkastens ist ein schwenkbares Dachelement 3 angeordnet. Fig. 1 zeigt ein leicht geöffnetes Frühbeet 1 mit schräg stehendem Dachelement 3, das über zwei verstellbare Lüftungshebel 4 am oberen Rand der Vorderwand des Frühbeetkastens abgestützt ist.

Fig. 2 zeigt ein weiteres mit Pflanzen besetztes Frühbeet 5 mit Satteldach. Das Frühbeet 5 besitzt einen aus sechs Wandelementen 6 zusammengesetzten, rechteckigen Frühbeetkasten, der mit der offenen Unterseite am Erdboden aufsitzt und an der offenen Oberseite ein aus zwei schwenkbaren Dachelementen 7 bestehendes Satteldach trägt. Fig. 2 zeigt ein leicht geöffnetes Frühbeet 5 mit einem schräg stehenden vorderen Dachelement 8, das über zwei verstellbare Lüftungshebel 9 am oberen Rand der Vorderwand des Frühbeetkastens abgestützt ist.

Fig. 3 zeigt ein weiteres mit Pflanzen besetztes Frühbeet 10 mit Pultdach. Das Frühbeet 10 besitzt einen aus vier Wandelementen 11 zusammengesetzten, rechteckigen Frühbeetkasten, der mit der offenen Unterseite am Erdboden aufsitzt und an der offenen Oberseite zwei nebeneinander angeordnete Dachelemente 12, 13 trägt. Fig. 3 zeigt ein leicht geöffnetes Frühbeet 10 mit zwei schräg stehenden Dachelementen 12, 13, die jeweils über zwei verstellbare Lüftungshebel 14 am oberen Rand der Vorderwand des Frühbeetkastens abgestützt sind.

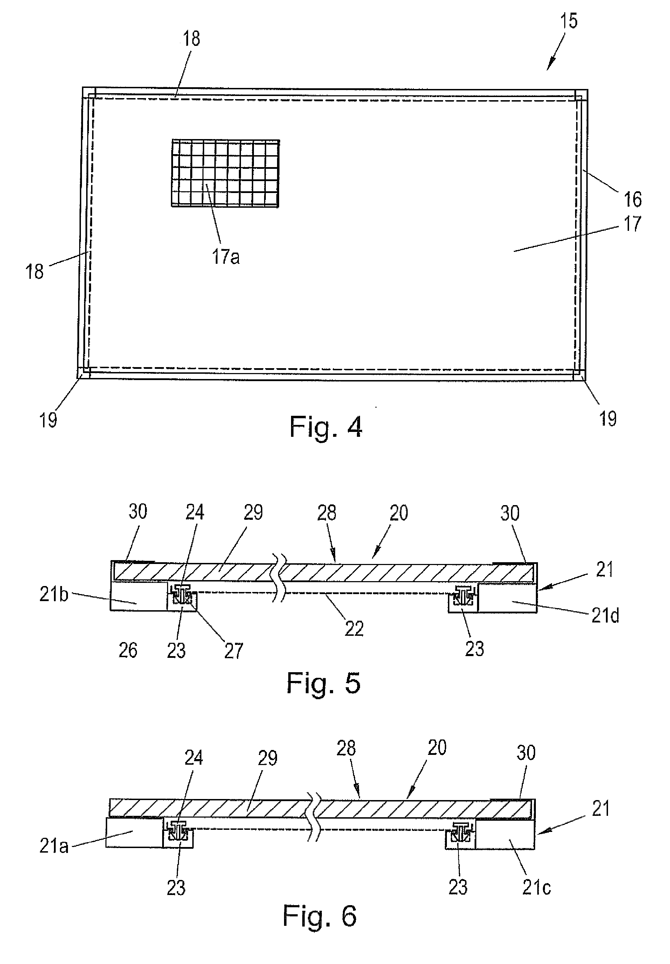

Die Fig. 4 zeigt ein neues lichtdurchlässiges Dachelement 15 für die Frühbeete 1, 5, 10 der Fig. 1, 2, 3. Das Dachelement 15 sieht einen äußeren, rechteckigen Rahmen 16 vor, der ein in seinem Innenraum angeordnetes, feinmaschiges, licht- und luftdurchlässiges Gitterelement 17 trägt, das mit seinem äußeren Rand auf vom Rahmen 16 nach innen vorstehenden Stegen 18 aufliegt. Das Gitterelement 17 überdeckt beim Frühbeet 1, 5, 10 der Fig. 1, 2, 3 den Innenraum des Frühbeets. Die Gitterstruktur des Gitterelements 17 ist in Fig. 4 im Detail 17a schematisch, etwas vergrößert dargestellt. Der Rahmen 16 sieht vier, an den Ecken des Rahmens 16 durch Eckstücke 19 miteinander verbundene Schenkel vor, von denen die Stege 18 seitlich abstehen, auf denen das Gitterelement 17 aufliegt. Das Gitterelement 17 ist an den Stegen 18 z. B. mittels Schmelzkleber fixiert. Für das Gitterelement 17 ist ein Gitter vorgesehen, das ein als Insektenschutzgitter oder als Fliegengitter ausgebildetes Drahtgitter ist, das aus einem Edelstahlgewebe oder aus einem Aluminiumgewebe besteht.

Das den Innenraum des Rahmens 16 überdeckende Gitterelement 17 kann einen dem Rahmen 16 benachbarten, verdickten, äußeren Rand besitzen, mit dem das Gitterelement 17 in nach oben offenen Längsnuten des Rahmens 16 aufgenommen ist, die bei zwei gegenüberliegenden Schenkeln des Rahmens 16 an den Innenseiten der Schenkel angeordnet sind.

Die Fig. 5 und 6 zeigen ein weiteres neues Dachelement 20 für die Frühbeete 1, 5, 10 der Fig. 1, 2, 3.

Das Dachelement 20 besitzt einen äußeren, rechteckigen Rahmen 21 mit vier, an den Ecken des Rahmens 21 miteinander verbundenen Schenkeln 21a bis 21d. Fig. 5 zeigt die beiden seitlichen Rahmenschenkel 21b und 21d. Fig. 6 zeigt den vorderen Rahmenschenkel 21a und den hinteren Rahmenschenkel 21c.

Der Rahmen 21 trägt ein von einem flexiblen, feinmaschigen Netz gebildetes, licht- und luftdurchlässiges Gitterelement 22, das den Innenraum des Rahmens 21 überspannt und an den Schenkeln des Rahmens 21 befestigt ist. Das Gitterelement 22 überdeckt beim Frühbeet 1, 5, 10 der Fig. 1, 2, 3 den Innenraum des Frühbeets.

Das flexible Netz ist bei den vier Schenkeln 21a bis 21d des Rahmens 21 in nach oben offenen Längsnuten 23 aufgenommen, die an den Innenseiten der Schenkel 21a bis 21d angeordnet sind. Zum Festhalten des flexiblen Netzes in den Längsnuten 23 kann eine dicke Schnur vorgesehen sein, die zusammen mit dem flexiblen Netz in die jeweilige Längsnut 23 hineingedrückt wird und dann das flexible Netz zwischen sich und der Längsnut 23 einklemmt und dadurch in der Längsnut 23 festhält.

Bei der in den Fig. 5 und 6 dargestellten Variante des Dachelements sind die nach oben offenen Längsnuten 23 als hinterschnittene Nuten ausgebildet. Das flexible Netz wird in den Längsnuten 23 durch in die Längsnuten 23 eingesetzte und die Hinterschneidungen der Längsnuten 23 hintergreifende Profilstäbe 24 festgehalten.

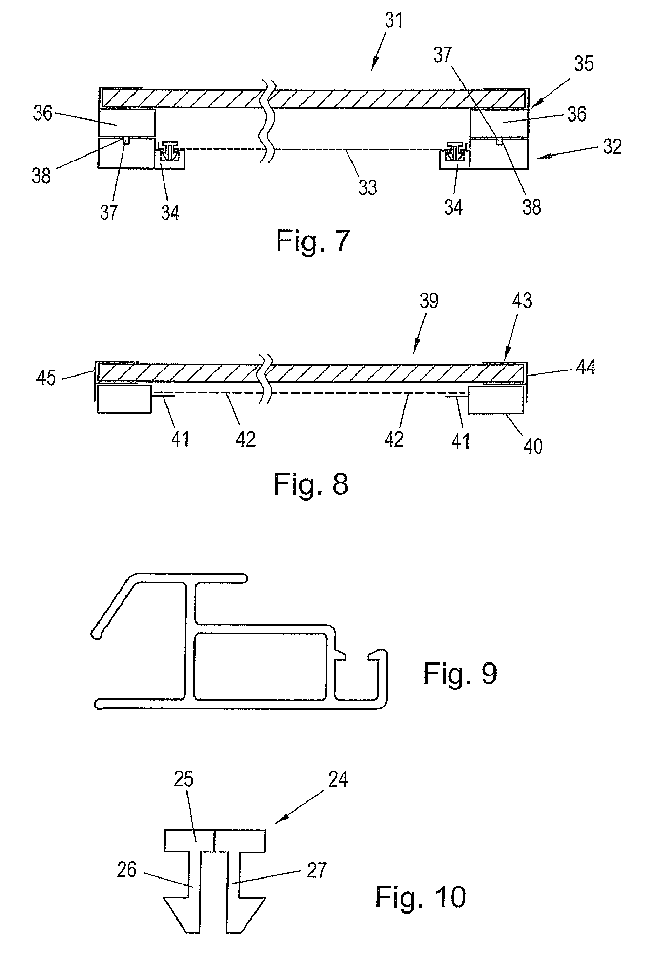

Die Profilstäbe 24 können als ein elastisches, in Querrichtung zusammendrückbares Klemmprofil ausgebildet sein. Fig. 10 zeigt einen solchen Profilstab im Querschnitt.

Der Profilstab 24 besitzt eine obere Leiste 25 und zwei von dieser nach unten abstehende, elastisch verformbare Stege 26, 27. Die beiden Stege 26, 27 sind mit Abstand nebeneinander angeordnet und besitzen jeweils ein verdicktes unteres Ende, das an der Außenseite der Stege 26, 27 abgeschrägt ist.

Der Profilstab 24 wird mit den unteren Enden der Stege 26, 27 voran zusammen mit dem flexiblen Netz in eine Längsnut 23 hineingedrückt. Dabei werden die Stege 26, 27 elastisch verformt und mit den unteren Enden zueinander gedrückt. In der Längsnut 23 dehnt sich der Profilstab 24 aus und die verdickten unteren Enden der Stege 26, 27 bewegen sich auseinander und hintergreifen die Hinterschneidungen der Längsnut 23. Dabei wird das flexible Netz zwischen der Längsnut 23 und den beiden Stegen 26, 27 des Profilstabes 24 eingeklemmt und in der Längsnut 23 festgehalten.

Für das Gitterelement 22 ist ein flexibles, feinmaschiges Netz vorgesehen, das ein als Insektenschutzgitter oder als Fliegengitter ausgebildetes Fiberglasgewebe ist, das mit Kunststoff z. B. PVC (Polyvinylchlorid) beschichtet sein kann.

Das Dachelement 20 sieht ein Fensterelement 28 vor, das im äußeren Rahmen 21 des Dachelements 20 über dem Gitterelement 22 angeordnet ist und das Gitterelement 22 überdeckt. Das Fensterelement 28 überdeckt beim Frühbeet 1, 5, 10 der Fig. 1, 2, 3 - so wie das Gitterelement 22 - den Innenraum des Frühbeets 1, 5, 10.

Als Fensterelement 28 ist eine transparente Platte 29 vorgesehen, die in am Rand des Dachelements 20 angeordnete Längsnuten 30 des Rahmens 21 eingeschoben ist und den Innenraum des Rahmens 21 überspannt. Beim Rahmen 21 sind die beiden seitlichen Rahmenschenkel 21b und 21d und der hintere Rahmenschenkel 21c mit nach innen zum Innenraum des Rahmens 21 hin offenen Längsnuten 30 versehen, in denen die transparente Platte 29 mit ihren seitlichen Rändern aufgenommen ist.

Die transparente Platte 29 kann im Frühjahr in das Dachelement 20 eingeschoben und am Beginn des Sommers aus dem Dachelement 20 herausgezogen werden.

Die Fig. 7 zeigt ein weiters neues Dachelement 31 für die Frühbeete 1, 5, 10 der Fig. 1,2,3.

Das Dachelement 31 sieht einen äußeren, rechteckigen Rahmen 32 vor, der ein seinen Innenraum überspannendes, flexibles, feinmaschiges Gitterelement 33 trägt. Das Gitterelement 33 ist an den Innenseiten der Rahmenschenkel in nach oben offenen Längsnuten 34 festgeklemmt. Für das Gitterelement 33 ist ein flexibles, feinmaschiges Netz vorgesehen, das ein als Insektenschutzgitter oder als Fliegengitter ausgebildetes Fiberglasgewebe ist, das mit Kunststoff z. B. PVC (Polyvinylchlorid) beschichtet sein kann.

Das Dachelement 31 sieht weiters ein über dem Gitterelement 33 angeordnetes, vom Dachelement 31 abnehmbares Fensterelement 35 vor, das beim Frühbeet 1, 5, 10 der Fig. 1, 2, 3 - so wie das flexible Gitterelement 33 - den Innenraum des Frühbeets 1, 5, 10 überdeckt. Das Fensterelement 35 besitzt einen äußeren, rechteckigen Rahmen 36, der an der Unterseite zwei vertikale Passstifte 37 trägt, denen vertikale Bohrungen 38 an der Oberseite des Dachelementrahmens 32 zugeordnet sind. Das Fensterelement 35 kann im Frühjahr auf das Dachelement 31 von oben aufgesetzt werden und am Beginn des Sommers vom Dachelement 31 nach oben abgezogen werden.

Die Fig. 8 zeigt ein weiters neues Dachelement 39 für die Frühbeete 1, 5, 10 der Fig. 1, 2, 3. Das Dachelement 39 sieht einen äußeren, rechteckigen Rahmen 40 vor, der mit von seinen Rahmenschenkeln nach innen abstehenden Stegen 41 versehen ist, auf denen ein steifes Gitterelement 42 aufliegt, das an den Stegen 41 z. B. mittels eines Schmelzklebers fixiert ist. Für das steife Gitterelement 42 ist ein Gitter vorgesehen, das ein als Insektenschutzgitter oder als Fliegengitter ausgebildetes Drahtgitter ist, das aus einem Edelstahlgewebe oder aus einem Aluminiumgewebe besteht. Das steife Gitterelement 42 überdeckt bei den Frühbeeten 1, 5, 10 der Fig. 1, 2, 3 jeweils den Innenraum des Frühbeets 1, 5, 10.

Das Dachelement 39 sieht ein über dem Gitterelement 42 angeordnetes und das Gitterelement 42 überdeckendes Fensterelement 43 vor, das beim Frühbeet 1, 5, 10 der Fig. 1, 2, 3 - so wie das steife Gitterelement 42 - den Innenraum des Frühbeets 1, 5, 10 überdeckt. Das Fensterelement 43 ist an zwei gegenüberliegenden Rändern mit Halteprofilen versehen 44, 45, die beim äußeren Rahmen 40 des Dachelements 39 zwei gegenüberliegende Schenkel umgreifen und das Fensterelement 43 am Dachelement 39 festhalten. Die beiden Halteprofile 44, 45 besitzen vom Fensterelement 43 nach unten vorstehende Profilschenkel, die beim äußeren Rahmen 40 des Dachelements 39 bei zwei gegenüberliegenden Schenkeln an der Außenseite anliegen. Das Fensterelement 43 kann mit Hilfe der Halteprofile 44, 45 auf den äußeren Rahmen 40 des Dachelements 39 von oben auf aufgesteckt, oder seitlich aufgeschoben werden.

Die an gegenüberliegenden Seitenrändern des Fensterelements 43 angebrachten Halteprofile können auch mit gegenüberliegende Schenkel des äußeren Rahmens 40 des Dachelements 39 an der Außenseite und an der Unterseite umgreifenden Führungsschienen versehen sein Ein mit solchen Halteprofilen versehenes Fensterelement 43 wird von der Seite her auf den äußeren Rahmen 40 des Dachelements 39 aufgeschoben und von diesem seitlich abgezogen.

Das vom äußeren Rahmen des Dachelements abnehmbare Fensterelement kann eine Glasplatte oder eine hochtransparente Hohlkammerplatte aus Kunststoff (Polykarbonat) enthalten.

Bei dem äußeren Rahmen des Dachelements, der das feinmaschige, licht- und luftdurchlässige Gitterelement trägt, können die Rahmenschenkel von Profilen aus Aluminium gebildet werden. Fig. 9 zeigt eine solches Alu-Profil im Querschnitt. Der äußere Rahmen des Dachelements kann auch aus Holz hergestellt sein.

## Patentansprüche

1. Frühbeet mit zumindest einem lichtdurchlässigen Dachelement (15, 20, 31, 39), das an der Oberseite des Frühbeets angeordnet ist, wobei das Dachelement (15, 20, 31, 39) einen äußeren Rahmen (16, 21, 32, 40) umfasst, der ein den Innenraum des Frühbeets überspannendes, feinmaschiges, licht- und luftdurchlässiges Gitterelement (17, 22, 33, 42) trägt, das im Innenraum des Rahmens angeordnet ist, wobei das Gitterelement (17, 22, 33, 42) als flexibles, feinmaschiges Netz ausgebildet ist, das an zumindest zwei Schenkeln (21 a - 21 d) des Rahmens (21, 32) in an den Innenseiten der Schenkel (21a - 21d) angeordneten, nach oben offenen Nuten (23, 34) aufgenommen ist, wobei das Gitterelement (17, 22, 33, 42) vorzugsweise in jeder Nut (23, 34) durch ein Klemmelement festgeklemmt ist, die Nuten (23, 34) eine Hinterschneidung aufweisen und das Gitterelement (17, 22, 33, 42) durch in den Nuten (23, 34) angeordnete, die Hinterschneidungen der Nuten (23, 34) hintergreifende Kemmelemente festgeklemmt ist, wobei als Klemmelement ein in die Nuten (23, 34) eingesetzter Profilstab (24) vorgesehen ist, der als ein elastisches, in Querrichtung zusammendrückbares Klemmprofil ausgebildet ist, wobei der äußere Rahmen (16, 21, 32, 40) ein über dem Gitterelement (17, 22, 33, 42) angeordnetes, das Gitterelement überdeckendes Fensterelement (28, 35, 43) trägt, das vorzugsweise am äußeren Rahmen (21, 32, 40) befestigbar und abnehmbar ist.

2. Frühbeet nach Anspruch 1, **dadurch gekennzeichnet, dass** das Gitterelement bei zumindest zwei gegenüberliegenden Schenkeln des Rahmens (16, 40) auf nach innen vorstehenden Stegen (18, 41) aufliegt.

3. Frühbeet nach Anspruch 1 oder 2, **dadurch gekennzeichnet, dass** das Gitterelement mit seinem äußeren Rand an zumindest zwei Schenkeln des Rahmens (16) in an den Innenseiten der Schenkel angeordneten, nach oben offenen Längsnuten aufgenommen ist.

4. Frühbeet nach einem der Ansprüche 1-3, **dadurch gekennzeichnet, dass** das Gitterelement (17, 42) aus einem als Insektenschutzgitter oder als Fliegengitter ausgebildeten Drahtgitter besteht, insbesondere aus einem Drahtgitter aus Edelstahlgewebe oder aus Aluminiumgewebe.

5. Frühbeet nach einem der Ansprüche 1 bis 4, **dadurch gekennzeichnet, dass** der Profilstab (24) eine obere Leiste (25) und zwei von dieser nach unten abstehende, elastisch verformbare Stege (26, 27) mit einem verdickten unteren Ende, das an der Außenseite der Stege (26, 27) abgeschrägt ist, umfasst.

6. Frühbeet nach einem der Ansprüche 1 bis 5, **dadurch gekennzeichnet, dass** das flexible, feinmaschige Netz (22, 33) aus einem als Insektenschutzgitter oder als Fliegengitter ausgebildeten, vorzugsweise beschichteten Fiberglasgewebe besteht.

7. Frühbeet nach Anspruch 1, **dadurch gekennzeichnet, dass** das Fensterelement als transparente Platte (29) ausgeführt ist, die in am Rand des Dachelements (20) angeordnete Längsnuten (30) eingeschoben ist.

8. Frühbeet nach Anspruch 7, **dadurch gekennzeichnet, dass** das Fensterelement (43) an zwei gegenüberliegenden Rändern mit Halteprofilen (44, 45) versehen ist, die zwei gegenüberliegende Schenkel des äußeren Rahmens (40) des Dachelements (39) umgreifen.

9. Frühbeet nach Anspruch 8, **dadurch gekennzeichnet, dass** das Fensterelement (35, 43) mit einem auf den äußeren Rahmen (32, 40) des Dachelements (31, 39) von oben aufsteckbaren Rahmen (36, 44, 45) versehen ist.

10. Frühbeet nach Anspruch 9, **dadurch gekennzeichnet, dass** der Rahmen (36) des Fensterelements (35) an der Unterseite zwei vertikale Passstifte (37) trägt, die beim äußeren Rahmen (32) des Dachelements (31) in vertikalen Bohrungen (38) aufgenommen sind.

11. Frühbeet nach einem der Ansprüche 7 bis 10, **dadurch gekennzeichnet, dass** das Fensterelement (28, 35, 43) eine Glasplatte oder eine hochtransparente Hohlkammerplatte aus Kunststoff umfasst.

## Claims

1. A cold frame comprising at least one light-permeable roof element (15, 20, 31, 39) which is arranged on the upper side of the cold frame, wherein the roof element (15, 20, 31, 39) has an outer frame (16, 21, 32, 40) which bears a fine-mesh, light- and air-permeable lattice element (17, 22, 33, 42) which spans the interior of the cold frame, which is arranged in the interior of the frame, wherein the lattice element (17, 22, 33, 42) is configured as a flexible, fine-mesh net which is accommodated at at least two legs (21a-21d) of the frame (21, 32) in upwardly open grooves (23, 34) arranged on the inner sides of the legs (21a-21d), wherein the lattice element (17, 22, 33, 42) is preferably fixedly clamped in each groove (23, 34) by a clamping element, the grooves (23, 34) have an undercut and the lattice element (17, 22, 33, 42) is fixedly clamped by means of clamping elements which are arranged in the grooves (23, 34) and engage behind the undercuts of the grooves (23, 34), wherein a profiled rod (24) which is inserted into the grooves (23, 34) is provided as clamping element which is designed as an elastic clamping profile which can be compressed in the transverse direction, wherein the outer frame (16, 21, 32, 40) bears a window element (28, 35, 43) which is arranged above the lattice element (17, 22, 33, 42) and covers the lattice element, which can preferably be fastened to the outer frame (21, 32, 40) and can be removed therefrom.

2. The cold frame according to claim 1, **characterized in that** the lattice element is supported at at least two mutually opposite legs of the frame (16, 40) on inwardly projecting webs (18, 41).

3. The cold frame according to claim 1 or 2, **characterized in that** the lattice element is accommodated by its outer edge at at least two legs of the frame (16) in upwardly open longitudinal grooves arranged on the inner sides of the legs.

4. The cold frame according to any one of claims 1-3, **characterized in that** the lattice element (17, 42) consists of a wire lattice formed as an insect protection screen or as a fly screen, in particular of a wire lattice of stainless steel fabric or of aluminium fabric.

5. The cold frame according to any one of claims 1-4, **characterized in that** the profiled rod (24) comprises an upper strip (25) and two elastically deformable webs (26, 27) which project downwards from this and have a thickened lower end which is bevelled at the outer side of the webs (26, 27).

6. The cold frame according to any one of claims 1-5, **characterized in that** the flexible, fine-mesh net (22, 33) consists of a preferably coated fibreglass fabric designed as an insect protection screen or as a fly screen.

7. The cold frame according to claim 1, **characterized in that** the window element is designed as a transparent plate (29) which is inserted into longitudinal grooves (30) arranged at the edge of the roof element (20).

8. The cold frame according to claim 7, **characterized in that** the window element (43) is provided at two opposite edges with retaining profiles (44, 45), which engage around two opposite legs of the outer frame (40) of the roof element (39).

9. The cold frame according to claim 8, **characterized in that** the window element (35, 43) is provided with a frame (36, 44, 45) which can be plugged from above onto the outer frame (32, 40) of the roof element (31, 39).

10. The cold frame according to claim 9, **characterized in that** the frame (36) of the window element (35) bears on the underside two vertical locating pins (37) which are accommodated in vertical holes (38) at the outer frame (32) of the roof element (31).

11. The cold frame according to any one of claims 7 to 10, **characterized in that** the window element (28, 35, 43) comprises a glass plate or a highly transparent hollow-chamber plate of plastic.

## Revendications

1. Châssis de couche avec au moins un élément formant toit (15, 20, 31, 39) transparent, qui est placé sur la face supérieure du châssis de couche, l'élément formant toit (15, 20, 31, 39) comprenant un cadre (16, 21, 32, 40) extérieur qui porte un élément formant treillis (17, 22, 33, 42) à mailles fines, transparent et perméable à l'air, recouvrant le châssis de couche, qui est placé à l'intérieur du cadre, l'élément formant treillis (17, 22, 33, 42) étant conçu comme un filet souple à mailles fines, qui est réceptionné sur au moins deux branches (21a à 21d) du cadre (21, 32), dans des rainures (23, 34) ouvertes vers le dessus, placées sur les faces intérieures des branches (21a à 21d), l'élément formant treillis (17, 22, 33, 42) étant coincé de préférence dans chaque rainure (23, 34) par un élément de serrage, les rainures (23, 34) comportant une contre-dépouille et l'élément formant treillis (17, 22, 33, 42) étant coincé par des éléments de serrage placés dans les rainures (23, 34), agrippant par derrière les contre-dépouilles des rainures (23, 34), alors qu'il est prévu en tant qu'élément de serrage une barre profilée (24) insérée dans les rainures (23, 34) qui est conçue en tant qu'un profilé de serrage élastique, compressible en direction transversale, le cadre (16, 21, 32, 40) extérieur portant un élément formant fenêtre (28, 35, 43) placé au-dessus de l'élément formant treillis (17, 22, 33, 42), recouvrant l'élément formant treillis, qui peut se fixer de préférence sur le cadre (21, 32, 40) extérieur et qui est amovible.

2. Châssis de couche selon la revendication 1, **caractérisé en ce que** sur au moins deux branches opposées du cadre (16, 40), l'élément formant treillis repose sur des listels (18, 41) saillant vers l'intérieur.

3. Châssis de couche selon la revendication 1 ou la revendication 2, **caractérisé en ce que** par son bord extérieur, l'élément formant treillis est réceptionné sur au moins deux branches du cadre (16) dans des rainures longitudinales ouvertes vers le dessus, placées sur les faces intérieures des branches.

4. Châssis de couche selon l'une quelconque des revendications 1 à 3, **caractérisé en ce que** l'élément formant treillis (17, 42) est constitué d'un treillis métallique conçu en tant que grille de protection anti-insecte ou en tant que moustiquaire, notamment en un treillis métallique en tissage d'acier inoxydable ou en tissage d'aluminium.

5. Châssis de couche selon l'une quelconque des revendications 1 à 4, **caractérisé en ce que** la barre profilée (24) comprend une baguette (25) supérieure et deux listels (26, 27) élastiquement déformables, débordant vers le bas à partir de cette dernière, avec une extrémité inférieure épaissie, qui est biseautée sur la face extérieure des listels (26, 27).

6. Châssis de couche selon l'une quelconque des revendications 1 à 5, **caractérisé en ce que** le filet (22, 33) à mailles fines est constitué en un tissage de fibres de verre de préférence revêtu, conçu en tant que grille de protection anti-insecte ou en tant que moustiquaire.

7. Châssis de couche selon la revendication 1, **caractérisé en ce que** l'élément formant fenêtre est réalisé en tant que panneau (29) transparent qui est inséré dans des rainures longitudinales (30) placées sur le bord de l'élément formant toit (20).

8. Châssis de couche selon la revendication 7, **caractérisé en ce que** sur deux bords opposés, l'élément formant fenêtre (43) est muni de profilés de retenue (44, 45) qui entourent deux branches opposées du cadre (40) extérieur de l'élément formant toit (39).

9. Châssis de couche selon la revendication 8, **caractérisé en ce que** l'élément formant fenêtre (35, 43) est muni d'un cadre (36, 44, 45) emboîtable par le dessus sur le cadre (32, 40) extérieur de l'élément formant toit (31, 39).

10. Châssis de couche selon la revendication 9, **caractérisé en ce que** sur la face inférieure, le cadre (36) de l'élément formant fenêtre (35) porte deux goupilles de serrage (37) verticales, qui sur le cadre (32) extérieur de l'élément formant toit (31) sont réceptionnées dans des perçages (38) verticaux.

11. Châssis de couche selon l'une quelconque des revendications 7 à 10, **caractérisé en ce que** l'élément formant fenêtre (28, 35, 43) comprend un panneau en verre ou une plaque alvéolaire ultra-transparente en matière plastique.
